# EUROPÄISCHE PATENTSCHRIFT

(11) **EP 2 167 829 B1**
(45) Veröffentlichungstag und Bekanntmachung des Hinweises auf die Patenterteilung: **05.03.2014**
(21) Anmeldenummer: 08749059.5
(22) Anmeldetag: 23.04.2008
(51) Int. Cl.: F16C 33/12, F16C 33/14, C22C 21/10, C22F 1/053

(54) **GLEITLAGERVERBUNDWERKSTOFF**
COMPOSITE MATERIAL FOR SLIDE BEARINGS
MATÉRIAU COMPOSITE POUR PALIER LISSE

(30) Priorität: 19.07.2007 DE 102007033563
(43) Veröffentlichungstag der Anmeldung: 31.03.2010
(73) Patentinhaber: KS Gleitlager GmbH, 68789 St. Leon-Rot (DE)
(72) Erfinder: SCHUBERT, Werner, 69168 Wiesloch (DE); THURAT, Heiko, 67346 Speyer (DE); THÜRNAGEL, Hans, 68753 Waghäusel (DE)
(74) Vertreter: DREISS Patentanwälte PartG mbB
(86) Internationale Anmeldenummer: PCT/EP2008/003256
(87) Internationale Veröffentlichungsnummer: WO 2009/010112

(56) Entgegenhaltungen:
- DE-B3- 10 343 618
- DE-B3-102005 001 537

## Beschreibung

Die Erfindung betrifft einen Gleitlagerverbundwerkstoff mit einer Trägerschicht aus Stahl und einer darauf unlösbar aufgebrachten Gleitschicht aus einer Aluminiumlagerlegierung mit den Merkmalen des Oberbegriffs des Anspruchs 1.

Ein derartiger Gleitlagerverbundwerkstoff ist bekannt aus DE 103 43 618 B3 und aus DE 10 1005 001 537 B3.

Derartige Gleitlagerverbundwerkstoffe werden im besonderen für die Herstellung von Gleitlagerschalen für Pleuellagerungen und für die Lagerung der Kurbelwelle im Kurbelgehäuse eines Kraftfahrzeugsverbrennungsmotors verwendet. Auch die Anwendung eines solchen Gleitlagerverbundwerkstoffs zur Herstellung gerollter Lagerbuchsen, beispielsweise Pleuellagerbuchsen oder Kolbenbolzenbuchsen, die den Kolbenbolzen im Kolben lagern, sind bekannt.

DE 198 00 433 C2 beschreibt keine Gleitlagerverbundwerkstoffe mit einer Trägerschicht aus Stahl sondern befasst sich mit einem Stranggießverfahren zum Vergießen einer Aluminium-Gleitlagerlegierung mit 3 bis 6 Gew.-% Zink, 0,3 bis 2,0 Gew.-% Kupfer, 0,2 bis 1,0 Gew.-% Magnesium, 0,3 bis 2,0 Gew.-% Silizium und 2 bis 4,5 Gew.-% Blei. Hierbei werden fein verteilte tropfenförmige Blei-Ausscheidungen im Stranggussstück mit einer Abmessung der Tropfen von weniger als 10 µm gebildet. Das Blei wirkt als fein und homogen verteilter Schmierstoff bei der Anwendung dieser Aluminiumlegierung als Gleitlagerlegierung.

EP 0 440 275 B1 befasst sich ebenfalls mit dem Vergießen monotektischer Aluminiumlagerlegierungen. In dieser Druckschrift ist die Rede von Aluminiumlagerlegierungen zur Herstellung von Gleitlagerwerkstoffen, die eine oder mehrere der Komponenten 1 bis 50 Gew.-%, vorzugsweise 5 bis 30 Gew.-% Blei, 3 bis 50 Gew.-%, vorzugsweise 5 bis 30 Gew.-% Wismut und 15 bis 50 Gew.-% Indium sowie zusätzlich eine oder mehrere der Komponenten 0,1 bis 20 Gew.-% Silizium, 0,1 bis 20 Gew.-% Zinn, 0,1 bis 10 Gew.-% Zink, 0,1 bis 5 Gew.-% Magnesium, 0,1 bis 5 Gew.-% Kupfer, 0,05 bis 3 Gew.-% Eisen, 0,05 bis 3 Gew.-% Mangan, 0,05 bis 3 Gew.-% Nickel und 0,001 bis 0,30 Gew.-% Titan enthalten. Weitere Hinweise auf die konkrete Zusammensetzung einer Aluminiumlagerlegierung lassen sich dieser Druckschrift nicht entnehmen.

EP 0 940 474 A1 betrifft eine Aluminiumlagerlegierung mit wenigstens 5 Gew.-% bis höchstens 15 Gew.-% Wismut, mit 0,5 - 15 Gew.-% Silizium, Zinn, Blei oder Mischungen hieraus und optional mit bis zu 3 Gew.-% Kupfer, Mangan, Magnesium, Nickel, Chrom, Zink, Antimon und Mischungen hieraus. Konkret offenbart ist eine Zusammensetzung AlBi8Sn1Si4Mn0,3 Legierung.

EP 0 190 691 A1 offenbart einen Gleitlagerverbundwerkstoff mit einer Trägerschicht aus Stahl und einer darauf unlösbar aufgebrachten Gleitschicht aus einer Aluminiumlagerlegierung, deren Zusammensetzung nach Anspruch 1 dieser Druckschrift im wesentlichen besteht aus 4 bis 9 Gew.-% Wismut, 1 bis 4,5 Gew.-% Silizium, 0 bis 1,7 Gew.-% Kupfer, 0 bis 2,5 Gew.-% Blei, und Rest Aluminium. Im Anspruch 3 dieser Druckschrift werden als weitere Zusätze eines oder mehrere der Materialen ausgewählt aus der Gruppe von Nickel, Mangan, Chrom, Zinn, Antimon und Zink genannt, wobei der Anteil von Zink bis zu 5 Gew.-% betragen darf. Die in dieser Druckschrift konkret offenbarten Zusammensetzungen der Aluminiumlagerlegierung lassen die gleichzeitige Verwendung von Wismut und Blei als vorteilhaft erscheinen.

Unter dem Handelsnamen KS R41 ist ein Gleitlagerverbundwerkstoff mit einer Trägerschicht aus Stahl und einer darauf unlösbar aufgebrachten Gleitschicht aus AlZn5Pb4Si1, 5Cu1Mg bekannt geworden.

Der vorliegenden Erfindung liegt die Aufgabe zugrunde, einen umweltfreundlichen Gleitlagerverbundwerkstoff der eingangs genannten Art bereitzustellen, dessen Aluminiumlagerlegierung gut vergießbar und umformbar ist und die dennoch gute tribologische Eigenschaften aufweist.

Diese Aufgabe wird erfindungsgemäß durch einen Gleitlagerverbundwerkstoff mit den Merkmalen des Anspruchs 1 gelöst.

Während die eingangs genannten gattungsgemäßen Gleitlagerverbundwerkstoffe sich durch hervorragende tribologische Eigenschaften auszeichnen, ist ihre Herstellung mitunter mit Schwierigkeiten verbunden. Die Herstellung umfasst in der Regel eine Vorplattierung, wobei eine Schicht aus Reinaluminium auf die die spätere Gleitschicht bildende bleifreie Aluminiumlagerlegierung aufplattiert wird, also in einem Walzverfahren aufgebracht wird. Um hier eine gute Haftfestigkeit zu erzielen, sind an sich hohe Umformgrade erforderlich. Es hat sich jedoch herausgestellt, dass dies bei dieser Aluminiumlegierung nur mit erhöhten Ausschussgraden möglich ist, da sie nur begrenzt umformbar ist. Bislang hat man einen in wirtschaftlicher Hinsicht nicht zufriedenstellenden Kompromiss gewählt.

Mit der vorliegenden Erfindung wurde überraschenderweise erkannt, dass eine Absenkung des Zink- und Siliziumgehalts in die beanspruchten Bereiche hier zu einer enormen Verbesserung führt. Die Anmelderin hat festgestellt, dass das Umformvermögen dieser neuen Legierung um 20 % erhöht ist. Trotz Absenkung des gewichtsprozentualen Anteils von Silizium und Zink gegenüber den vorbekannten Aluminiumlagerlegierungen, wo der Zinkgehalt zwischen 4,4 und 6,0 Gew.-% und der Siliziumgehalt zwischen 1,0 und 2,0 Gew.-% lag, werden gute tribologische Eigenschaften der Gleitschicht erreicht. Der erfindungsgemäße Gleitlagerverbundwerkstoff ist zur Verwendung als Haupt- und Pleuellager (Schale und Buchse) sowie als Anlaufscheibe geeignet.

Wismut kann vorteilhafterweise im Bereich von 2,5 - 4,5 Gew.%, insbesondere von 2,5 - 3,5 Gew.-%, zugesetzt werden. Wenn Wismut nur im Bereich von 1,0 - 2,5 Gew.-% zugesetzt wird, so wird die Vergießbarkeit der Aluminiumlagerlegierung verbessert. Auch mit Wismutgehalten in diesem Bereich werden für die meisten Anwendungen hinreichend gute Reibwerte erreicht.

Durch Lösungsglühen und unmittelbar anschließendes Abschrecken werden Ausscheidungen von Zink mit einer Teilchengröße von vorzugsweise weniger als 10 µm erreicht.

Eine bevorzugte Zusammensetzung einer bleifreien Aluminiumlagerlegierung ist gegeben durch AlZn3Bi3Cu1Si0, 6Mg.

Auch die neben Zink und Wismut weiteren Bestandteile Silizium, Kupfer und vor allem Magnesium sind für die zufriedenstellenden und vorteilhaften Eigenschaften des erfindungsgemäßen Gleitlagerverbundwerkstoffs wesentlich. So wirkt Magnesium verfestigend; es bildet mit Aluminium die intermetallische Phase Al₃Mg₂. Kupfer bildet in vorteilhafter Weise die intermetallische Phase Al₂Cu. Hierdurch wird die Festigkeit des Aluminium-Mischkristalls erhöht, was darauf zurückgeführt wird, dass die Bestandteile den Kristall verspannen und damit stabilisieren und hart machen.

## Patentansprüche

1. Gleitlagerverbundwerkstoff mit einer Trägerschicht aus Stahl und einer darauf unlösbar aufgebrachten Gleitschicht aus einer bleifreien Aluminiumlagerlegierung bestehend aus Zink, Silizium, 1,0 - 4,5 Gew.-% Wismut, 0,8 - 1,2 Gew.-% Kupfer und 0,2 - 0,8 Gew.-% Magnesium sowie gegebenenfalls Titan, Nickel, Mangan, Zinn jeweils bis höchstens 0,2 Gew.-% und weiter gegebenenfalls Eisen bis höchstens 0,6 Gew.-% und weiter gegebenenfalls verunreinigungsbedingten Zusätzen von jeweils höchstens 0,1 Gew.-%, deren Gesamtmenge in der Summe aber nicht mehr als 1 Gew.-% beträgt, wobei die Aluminiumlagerlegierung einen mit Zink übersättigten Aluminium-Mischkristall bildet, in dem Zink durch Lösungsglühen und anschließendes Abschrecken in feiner Verteilung vorliegt, **dadurch gekennzeichnet dass** Silizium zu 0,4 - 0,8 Gew.-% und Zink zu 2,5 - 3,5 Gew.-% in der Aluminiumlagerlegierung enthalten ist.

2. Gleitlagerverbundwerkstoff nach Anspruch 1, **dadurch gekennzeichnet, dass** Zink mit einer Teilchengröße von weniger als 10 µm vorliegt.

3. Gleitlagerverbundwerkstoff nach Anspruch 1 oder 2,
**dadurch gekennzeichnet, dass** Wismut zu 2,5 - 4,5 Gew.-%, insbesondere 2,5 - 3,5 Gew.-%, in der Aluminiumlagerlegierung enthalten ist.

4. Gleitlagerverbundwerkstoff nach Anspruch 1 oder 2,
**dadurch gekennzeichnet, dass** Wismut zu 1,0 - 2,5 Gew.-% in der Aluminiumlagerlegierung enthalten ist.

## Claims

1. A composite material for slide bearings, having a substrate layer of steel and a sliding layer, applied inseparably to the substrate layer, of a lead-free aluminum alloy comprising zinc, silicon, from 1.0 to 4.5 weight % bismuth, from 0.8 to 1.2 weight % copper and 0.2 to 0.8 weight % magnesium, as well as optionally titanium, nickel, manganese and tin, each up to a maximum of 0.2 weight %, and also optionally iron up to a maximum of 0.6 weight % and also optionally contamination-dictated additions each of a maximum of 0.1 weight %, the total quantity of which, however, amounts to no more than 1 weight %, the aluminum alloy forming an aluminum mixed crystal supersaturated with zinc, in which crystal zinc is present in a fine distribution as a result of solution annealing and subsequent quenching, **characterized in that** from 0.4 to 0.8 weight % of silicon and 2.5 to 3.5 weight % of zinc are contained in the aluminum alloy.

2. The composite material for slide bearings of claim 1, **characterized in that** zinc with a particle size of less than 10 µm is present.

3. The composite material for slide bearings of claim 1 or 2, **characterized in that** from 2.5 to 4.5 weight %, in particular 2.5 to 3.5 weight %, of bismuth is contained in the aluminum alloy.

4. The composite material for slide bearings of claim 1 or 2, **characterized in that** from 1.0 to 2.5 weight % of bismuth is contained in the aluminum alloy.

## Revendications

1. Matériau composite pour palier lisse avec une couche de support en acier et, rapportée de manière inamovible sur celle-ci, une couche de glissement en alliage d'aluminium pour palier exempt de plomb, composé de zinc, de silicium, de 1 à 4,5 % en poids de bismuth, de 0,8 à 1,2 % en poids de cuivre et 0,2 à 0,8 % en poids de magnésium, ainsi qu'éventuellement du titane, du nickel, du manganèse et du zinc, selon un pourcentage pondéral individuel inférieur ou égal à 0,2 %, ainsi qu'éventuellement du fer à raison de 0,6 % en poids au maximum, et en outre éventuellement des éléments additionnels liés à des impuretés, dont la teneur individuelle ne dépasse pas 0,1 %, en poids, et dont la teneur cumulée ne dépasse pas 1 % en poids, dans lequel l'alliage d'aluminium pour palier formant une solution solide d'aluminium sursaturée en zinc, dans laquelle le zinc est présent à l'état finement dispersé grâce à un recuit de mise en solution suivi d'une trempe, **caractérisé en ce que** le silicium est contenu à une teneur de 0,4 à 0,8 % en poids, et le zinc à une teneur de 2,5 à 3,5 % en poids, dans l'alliage d'aluminium pour palier.

2. Matériau composite pour palier lisse selon la revendication 1, **caractérisé en ce que** le zinc est présent avec une taille de particules inférieure à 10 µm.

3. Matériau composite pour palier lisse selon la revendication 1 ou 2, **caractérisé en ce que** le bismuth est contenu dans l'alliage d'aluminium pour palier à une teneur de 2,5 à 4,5 % en poids, en particulier de 2,5 à 3,5 % en poids.

4. Matériau composite pour palier lisse selon la revendication 1 ou 2, **caractérisé en ce que** le bismuth est contenu dans l'alliage d'aluminium pour palier à une teneur de 1 à 2,5 % en poids.
